# EUROPÄISCHE PATENTANMELDUNG

(11) **EP 0 780 439 A2**
(43) Veröffentlichungstag der Anmeldung: **25.06.1997**
(21) Anmeldenummer: 96119779.5
(22) Anmeldetag: 10.12.1996
(51) Int. Cl.: C08L 77/12, C08L 1/10

(54) **Thermoplastisch verarbeitbare, biologisch abbaubare Formmassen**

(30) Priorität: 22.12.1995 DE 19548323
(71) Anmelder: BAYER AG, 51368 Leverkusen (DE)
(72) Erfinder: Simon, Joachim, Dr., 40589 Düsseldorf (DE); Müller, Hanns Peter, Dr., 51519 Odenthal (DE); Dijkstra, Dirk Jacques, Dr., 50935 Köln (DE); Engelhardt, Jürgen Dr., 29683 Fallingbostel (DE); Müller, Volkhard, Dr., 29699 Bomlitz (DE); Weber, Gunter, Dr., 29683 Fallingbostel (DE)

(57) **Zusammenfassung**

Gegenstand der vorliegenden Erfindung sind thermoplastisch verarbeitbare und vollständig biologisch abbaubare Formmassen, ein Verfahren zu deren Herstellung, sowie deren Verwendung als biologisch abbaubare Werkstoffe zur Herstellung von beispielsweise Spritzgußteilen, Folien, Fasern oder Beschichtungen.

## Beschreibung

Gegenstand der vorliegenden Erfindung sind thermoplastisch verarbeitbare und vollständig biologisch abbaubare Formmassen, ein Verfahren zu deren Herstellung, sowie deren Verwendung als biologisch abbaubare Werkstoffe zur Herstellung von beispielsweise Spritzgußteilen, Folien, Fasern oder Beschichtungen.

Die Formmassen bestehen aus entweder einer binären Mischung eines thermoplastischen und biologisch vollständig abbaubaren vollsynthestischen Kunststoffes wie z. B. Polyesteramid, mit einem ebenfalls thermoplastisch verarbeitbaren biologisch vollständig abbaubaren Cellulosederivat oder einer ternären Mischung mit weiteren biologisch abbaubaren thermoplastisch verarbeitbaren niedermolekularen oder polymeren Komponenten, die z.B. zur Weichmachung oder Verträglichkeitsvermittlung dienen.

Biologisch abbaubare und thermoplastisch verarbeitbare Mischungen oder Blends aus vollsynthetischen Polymeren und Cellulosederivaten sind beschrieben. Im Gegensatz zu einer echten Mischung, die sich durch eine negative freie Mischungsenthalpie auszeichnet (Macromolecules 23, (1990) 5240-5250) und zu homogenen, transparenten Materialien führt, dienen in zahlreichen beschriebenen Beispielen die Cellulosederivate nur als mechnische Füllstoffe (Elias Macromoleküle, Hüthig u. Wepf, Basel, 1972, S 360 ff). In diesem Falle sind die Cellulosederivate auf molekularer Ebene nicht mit den vollsynthetischen Polymeren gemischt.

Als vollsynthetische Komponente werden bevorzugt biologisch abbaubare Polyester wie z. B. Polycaprolacton (J. Appl. Polym. Sci 21 (1977) 3035, Polym. Degr. and Stability 45 (1994) 261-165, Polym. Engineering Science 30 (1990) 71-82, DE 3 322 118, UK 2 158 081, JP 04 275 301, JP 61 037 814, EP 639 600, US 4 443 595) oder Polyurethane (EP 449 041) verwendet.

Polym. Bull. 27, (1991) 345-352 und Int. H. Pharm. 31, (1986) 55-64 beschreiben Mischungen von Cellulosederivaten mit Polyethylenoxiden oder Polyvinylalkohol (Macromolecules 21 (1988) 1270-1277), deren biologische Abbaubarkeit noch umstritten ist.

Bis auf wenige Ausnahmen wie z.B. Ethylenvinylacetat-Copolymere in bestimmten Comonomerverhältnissen (Kunststoff-Handbuch Bd. 3/1, Hanser Verl., Wien, 1992, Seite 419 ff) sind keine Polymere gefunden worden, die generell als Mischung mit Cellulosederivaten in Bezug auf Transparenz und Verarbeitbarkeit zu thermoplastisch verarbeitbaren, homogenen, transparenten Formmassen geführt hätten ( US-P 4 506 045).

J. Env. Pol. Degr. 3 (1995) 1-11, US-P 5 446 079 sowie EP-A 597 478 beschreiben thermoplastisch verarbeitbare, biologisch abbaubare Mischungen von Celluloseestern mit aliphatisch-aromatischen Polyestern. An der vollständigen biologischen Abbaubarkeit von Celluloseestern, insbesondere Celluloseacetaten mit DS > 1.0 in gängigen Kompostiereinrichtungen bestehen jedoch noch starke Zweifel (J. Appl. Bacteriology 66 (1986) 225).

US-P 3 668 157 beschreibt die Mischbarkeit von Polyester-Polyether-Copolymeren mit Celluloseestern, die Homopolymere bilden keine Blends mit den Cellulosederivaten.

US-P 3 781 381 beschreibt die Mischbarkeit von Celluloseestern mit Polycaprolacton. In J. Appl. Polym. Sci 21 (1977) 3035 werden derartige Blends jedoch als nicht mischbar beschrieben.

US-P 4 533 397 beschreibt Blends aus Copolymeren von Polyester-Polycarbonaten und Celluloseestern.

Biologisch abbaubare und thermoplastisch verarbeitbare Cellulosederivate sind in Form der aufgepfropften Cellulose-Polycaprolactonester (EP-A 626 392) oder in Form der Cellulosephthalsäurehydroxypropylester (EP-A 668 293) bekannt. An der biologischen Abbaubarkeit von Cellulosediacetaten bestehen teilweise noch starke Zweifel.

Es ist Aufgabe der vorliegenden Erfindung, einen Blend aus biologisch abbaubaren und thermoplastisch verarbeitbaren vollsynthetischen Polymeren mit ebenfalls biologisch abbaubaren und thermoplastisch verarbeitbaren Cellulosederivaten bereitzustellen, um die unzureichenden mechanischen Materialeigenschaften der Cellulosederivate wie z. B. Sprödigkeit, Reißfestigkeit, Dehnbarkeit zu verbessern.

Hierbei wurde überraschend und für den Fachmann nicht vorhersagbar gefunden, daß sich Celluloseetherester, wie z. B. Hydroxypropylcellulosephthalate mit thermoplastisch verarbeitbaren, vollständig biologisch abbaubaren Polyesteramiden zu transparenten, homogenen Werkstoffen mischen lassen. Es liegt also einer der wenigen oben beschriebenen Ausnahmen vor, in denen eine gute Mischbarkeit von Cellulosederivaten mit vollsynthetischen Polymeren gegeben ist. Hierbei wird die thermoplastische Verarbeitbarkeit durch Zugabe von für die Cellulosederivate geeigneten Weichmachern und/oder weiteren Zuschlagstoffen deutlich verbessert.

Im erfindungsgemäßen Sinne können die aliphatischen Polyesteramide aus
I) einem Esteranteil aus linearen und/oder cycloaliphatischen bifunktionellen Alkoholen wie beispielsweise Ethylenglykol, Hexandiol, Butandiol, bevorzugt Butandiol, Cyclohexandimethanol, und zusätzlich gegebenenfalls geringen Mengen höherfunktionellen Alkoholen, z.B. 1,2,3-Propantriol oder Neopentylglykol, sowie aus linearen und/oder cycloaliphatischen bifunktionellen Säuren, z. B. Bernsteinsäure, Adipinsäure, Cyclohexandicarbonsäure, bevorzugt Adipinsäure und zusätzlich gegebenenfalls geringen Mengen höherfunktioneller Säure, z.B. Trimellitsäure, oder
II) aus einem Esteranteil aus Säure- und alkoholfunktionalisierten Bausteinen beispielsweise Hydroxybuttersäure oder Hydroxyvaleriansäure oder deren Derivaten, beispielsweise ε-Caprolacton. oder einer Mischung oder einem Copolymer aus I und II und
III) einem Amidanteil aus linearen und/oder cycloaliphatischen bifunktionellen und zusätzlich gegebenenfalls geringen Mengen höherfunktioneller Amine, z. B. Tetramethylendiamin, Hexamethylendiamin, Isophorondiamin, sowie aus linearen und/oder cycloaliphatischen bifunktionellen und zusätzlich gegebenenfalls geringen Mengen höherfunktioneller Säuren z.B. Bernsteinsäure oder Adipinsäure, oder
IV) aus einem Amidanteil aus säure- und aminfunktionalisierten Bausteinen, bevorzugt ω-Laurinlactam und besonders bevorzugt ε-Caprolactam,
   oder einer Mischung aus III und IV als Amidanteil hergestellt werden, wobei
   der Esteranteil I und/oder II mindestens 30 Gew.-%, bezogen auf die Summe aus I, II, III und IV, beträgt.

Die biologisch abbaubaren Copolyesteramide haben ein Molgewicht von mindestens 10.000 g/mol und besitzen eine statistische Verteilung der Ausgangstoffe (Monomere) im Polymer. Eine Beschreibung der erfindungsgemäßen Polyesteramide beinhaltetet die EP 641 817.

Biologisch abbaubare und thermoplastisch verarbeitbare Cellulosederivate, die im erfindungsgemäßen Sinn verwendet werden können, sind Celluloseetherester, besonders bevorzugt aus Hydroxyethylcellulose oder Hydroxypropylcellulose, die durch eine nachfolgende Veresterung der Celluloseether hergestellt worden sind.

Die Herstellung von Celluloseethern ist in Enzyclopedia of polymer science and engineering , Wiley N.Y. 1985 Vol. 3, S. 242 ff. beschrieben.

Als Epoxide eignen sich bevorzugt Monoepoxide wie Ethylenoxid, Propylenoxid, 1,2-Epoxybutan, 1,2-Epoxyhexan, 1,2-Epoxyoctan, 1,2-Epoxydecan, 1,2-Epoxydodecan, Hexadecan, Octadecan, Stearinsäureglicydylether, Epoxybutylstearat, Laurylglycidylether, Glycidylmethylether, Glycidylethylether, Glycidylpropylether, Glycidylbutylether, Glycidyltertiärbutylether, Glycidylacrylat, Glycidylmethacrylat Allylglycidylether, Butsadienmonoxid, Glycidol, 3-Glycidoxypropyltrimethoxysilan, 3-Glycidoxypropyltriethoxysilan, Di-N-Butylamino-2,3-epoxypropan, Diethyl-b-y-epoxypropylphosphat, 4-(2,3-Epoxypropyl)morpholin und Styroloxid.

Die Veresterung des Celluloseethers kann z. B. mit einem Lacton wie z. B. β - Propiolacton, γ-Butyrolacton, β-Butyrolacton, δ-Valerolacton, Glycolid, Lactid und besonders bevorzugt ε-Caprolacton nach einem in EP-A 668 293 beschriebenen Verfahren zu einem thermoplastisch verarbeitbaren, vollständig biologisch abbaubaren Celluloseetherester erfolgen.

Geeignete erfindungsgemäße Celluloseetherester können auch durch Veresterung von Celluloseethern mit Dicarbonsäureanhydriden wie Phthalsäureanhydrid, Tetrahydrophthalsäureanhydrid, Hexahydrophthalsäureanhydrid, Maleinsäureanhydrid, Bernsteinsäureanhydrid und Trimellitsäureanhydrid gemäß EP-A 668 293 hergestellt werden.

Hierbei ist es möglich, die freie Carboxylgruppe des Dicarbonsäuremonocelluloseethers noch weiter mit Alkylenoxiden umzusetzen. Dabei können die Mengenverhältnisse so gewählt werden, daß die freien Carbonsäure vollständig oder nur teilweise mit Alkylenoxid umgesetzt werden. Ebenso können die freien Säuregruppen als Starter für einen polymeren Etheraufbau dienen.

Als Epoxide können wiederum Monoepoxide wie Ethylenoxid, Propylenoxid 1,2-Epoxybutan, 1,2-Epoxyhexan, 1,2-Epoxyoctan, 1,2-Epoxydecan, 1,2-Epoxydodecan, Hexadecan, Octadecan, Stearinsäureglicydylether, Epoxybutylstearat, Laurylglycidylether, Glycidylmethylether, Glycidylethylether, Glycidylpropylether, Glycidylbutylether, Glycidyltertiärbutylether, Glycidylacrylat, Glycidylmethacrylat, Allylglycidylether, Butadienmonoxid, Glycidol, 3-Glycidoxypropyltrimethoxysilan, 3-Glycidoxypropyltriethoxysilan, Di-N-Butylamino-2,3-epoxypropan, Diethyl-β-γ-epoxypropylphosphat, 4-(2,3-Epoxypropyl)morpholin und Styroloxid verwendet werden.

Als Weichmacher oder Zuschlagstoffe können die üblichen Weichmacher für Celluloseester, besonders bevorzugt Triacetin, Triethylenglykol, Glycerin, Triphenylphosphat, Resorcindiphosphat, Polyethylenglykol, Propylenglykol, Milchsäureethylester, Milchsäuremethylester, Caprolacton, Weinsäuredimethylester und Weinsäurediethylester verwendet werden.

Die thermoplastischen Formmassen enthalten im allgemeinen 0,1 bis 95 Gew.-%, bevorzugt 20 Gew.-% bis 55 Gew.-%, besonders bevorzugt 25 Gew.-% bis 44 Gew.-% Celluloseetherester. Bevorzugt enthalten die thermoplastischen Formmassen Weichmacher. Im allgemeinen werden 0,1 Gew.-% bis 40 Gew.-%, bevorzugt, 1 bis 30 Gew.-%, besonders bevorzugt 5 bis 20 Gew.-% Weichmacher zugesetzt.

Gegenstand der Erfindung ist ebenfalls ein Verfahren zur Herstellung der erfindungsgemäßen thermoplastischen und biologisch abbaubaren Formmassen, dadurch gekennzeichnet, daß die Cellulosederivate zunächst mit einem geeigneten Weichmacher bei Temperatur >120°C vermischt oder verknetet wird, und anschließend in einem Kneter oder Extruder mit den Polyesteramid innig vermischt werden.

Gegenstand der Erfindung sind ebenfalls die aus den erfindungsgemäßen thermoplastischen Formmassen hergestellten Formkörper, Folien, Formteile, Fasern oder Extrudate.

Gemäß der DIN 54 900 ist unter Bioabbau/Bioabbaubarkeit folgendes zu verstehen:

Biologischer Abbau eines Materials ist ein durch biologische Aktivität verursachter Vorgang, der unter Veränderung dessen chemischen Struktur zu natürlich vorkommenden Stoffwechselprodukten führt.

### Beispiele

### Vergleichsbeispiel 1

60 Gew.-% biologisch abbaubares Polyesteramid aus 60 Gew.-% Anteilen Polycaprolactam und 40 Gew.-% Anteilen eines Esters aus Adipinsäure und Butandiol werden mit 27 Gew.-% Cellulosediacetat und 13 % Triacetin auf einem Zweiwellenextruder Brabender ZSK 32/14 mit 2.4 kg/h bei einer Drehzahl von 40 upm und 190°C Massetemperatur compoundiert und danach zu Prüfkörpern verspritzt. Das extrudierte Material ist inhomogen, trüb und liegt mehrphasig im Compound vor.

Die Prüfung im Zugversuch nach DIN 53 457 ergibt folgenden Wert:
- Bruchspannung: 12,5 m Pa
- Bruchdehnung: 4,6 %

### Erfindungsgemäßes Beispiel:

### Beispiel 1:

60 Gew.-% biologisch abbaubares Polyesteramid aus 60 Gew.-% Anteilen Polycaprolactam und 40 Gew.-% Anteilen eines Esters aus Adipinsäure und Butandiol werden mit 34 Gew.-% Hydroxypropylcellulosephthalat, welches mit Propylenoxid nachverestert wurde (DS Phthalsäure 1.4, DS Propylenoxid 2.5) und vorher mit 6 Gew.-% Triacetin vermischt wurde, auf einem Zweiwellenextruder Brabender ZSK 32/14 mit 2.4 kg/h bei einer Drehzahl von 40 upm und 190°C Massetemperatur zu einem homogenen transparenten Granulat compoundiert und danach zu Prüfkörpern verspritzt.

Die Prüfung im Zugversuch nach DIN 53 457 ergibt folgenden Wert:
- Bruchspannung: 20,1 m Pa
- Bruchdehnung: 32 %

## Patentansprüche

1. Thermoplastische Formmassen, enthaltend vollständig biologisch abbaubare Polyesteramide und thermoplastisch verarbeitbare Cellulosederivate.

2. Formmassen gemäß Anspruch 1, enthaltend Celluloseetherester als Cellulosederivate.

3. Formmassen gemäß Anspruch 1, enthaltend einen für Cellulosederivate geeigneten Weichmacher.

4. Formmassen gemäß Anspruch 1, enthaltend 0,1 bis 95 Gew.-% Celluloseetherester und gegebenenfalls 0,1 bis 40 Gew.-% Weichmacher (bezogen auf die Gesamtformmasse).

5. Formmassen gemäß Anspruch 4, enthaltend 20 bis 55 Gew.-% Celluloseetherester.

6. Formmassen gemäß Anspruch 1, enthaltend 1 bis 30 Gew.-% Weichmacher.

7. Formmassen gemäß Anspruch 1, enthaltend Polyesteramide aus
I) einem Esteranteil aus linearen und/oder cycloaliphatischen bifunktionellen Alkoholen wie beispielsweise Ethylenglykol, Hexandiol, Butandiol, bevorzugt Butandiol, Cyclohexandimethanol, und zusätzlich gegebenenfalls geringen Mengen höherfunktionellen Alkoholen, z. B. 1,2,3-Propantriol oder Neopentylglykol, sowie aus linearen und/oder cycloaliphatischen bifunktionellen Säuren, z. B. Bernsteinsäure, Adipinsäure, Cyclohexandicarbonsäure, bevorzugt Adipinsäure und zusätzlich gegebenenfalls geringen Mengen höherfunktioneller Säure, z. B. Trimellithsäure, oder
II) aus einem Esteranteil aus säure- und alkoholfunktionalisierten Bausteinen beispielsweise Hydroxybuttersäure oder Hydroxyvaleriansäure oder deren Derivaten, beispielsweise έ-Caprolacton oder einer Mischung oder einem Copolymer aus I und II und
III) einem Amidanteil aus linearen und/oder cycloaliphatischen bifunktionellen und zusätzlich gegebenenfalls geringen Mengen höherfunktioneller min, z. B. Tetramethylendiamin, Hexamethylendiamin, Isophorondiamin, sowie aus linearen und/oder cycloaliphatischen bifunktionellen und zusätzlich gegebenenfalls geringen Mengen höherfunktioneller Säuren z.B. Bernsteinsäure oder Adipinsäure, oder
IV) aus einem Amidanteil aus säure- und aminfunktionalisierten Bausteinen, bevorzugt ω-Laurinlactam und besonders bevorzugt ε-Caprolactam,
oder einer Mischung aus III und IV als Amidanteil hergestellt werden, wobei
der Esteranteil I und/oder II mindestens 30 Gew.-%, bezogen auf die Summe aus I, II, III und IV, beträgt.

8. Formkörper, Folien, Formteile, Fasern und Extrudate, hergestellt aus Formmassen gemäß Anspruch 1.
